# EUROPEAN PATENT APPLICATION

(11) **EP 1 511 240 A2**
(43) Date of publication of application: **02.03.2005**
(21) Application number: 04019082.9
(22) Date of filing: 11.08.2004
(51) Int. Cl.: H04L 12/56

(54) **Controlling data delivery in a wireless communication system with digestion of data units**

(30) Priority: 25.08.2003 US 481282 P
(71) Applicant: ASUSTeK Computer Inc., Peitou, Taipei City (TW)
(72) Inventor: Jiang, Sam Shiaw-Shiang, Hsin-Chu City (TW)
(74) Representative: TER MEER STEINMEISTER & PARTNER GbR

(57) **Abstract**

A method according to the present invention blocks a sender from processing SDUs required to be transmitted through a radio bearer when a memory block corresponding to the radio bearer is full, and guarantees that every PDUs received by a receiver can be accommodated in a memory block corresponding to a new radio bearer. With regard to data transmission, after a transmitting buffer is reconfigured, PDUs required to be transmitted through a previously established radio bearer are kept and gradually received by the receiver. A new radio bearer is guaranteed to gradually take control of these occupied storage space. With regard to data reception, the receiver outputs WINDOW SUFIs to the sender for dynamically tuning a transmission window size for the new radio bearer so that PDUs transmitted from the sender will never be discarded. To sum up, radio transmission efficiency is greatly improved, and data throughput is optimized.

## Description

### Cross Reference To Related Applications

The application claims the benefit of U.S. Provisional Application No. 60/481, 282, which was filed on 08/25/2003 and was entitled "DIGEST HANDLING OF BUFFER MEMORY AFTER RLC WINDOW SIZE RECONFIGURATION".

### Background of Invention

### 1. Field of the Invention

The present invention relates to a method and an apparatus of controlling data transmission in a wireless communication system, and more specifically, to a method and an apparatus of controlling data delivery between two stations for digesting data units outside a reconfigured transmitting window and a reconfigured receiving window.

### 2. Description of the Prior Art

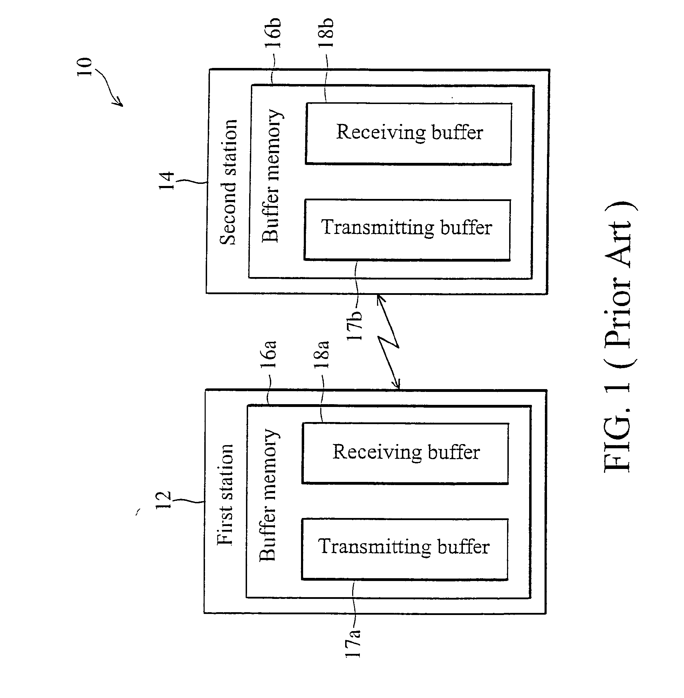

Please refer to Fig.1. Fig. 1 is a simplified block diagram of a prior art wireless communication system 10, as defined by the well-known 3^{rd} Generation Partnership Project (3GPP) specification. The wireless communication system 10 includes a first station 12 in wireless communication with a second station 14. As an example, the first station 12 is a mobile unit, such as a cellular telephone, and the second station 14 is a base station. Each of the first station 12 and the second station 14 has a buffer memory 16a, 16b. The buffer memory 16a has a transmitting buffer 17a and a receiving buffer 18a. Similarly, the buffer memory 16b has a transmitting buffer 17b and a receiving buffer 18b as well.

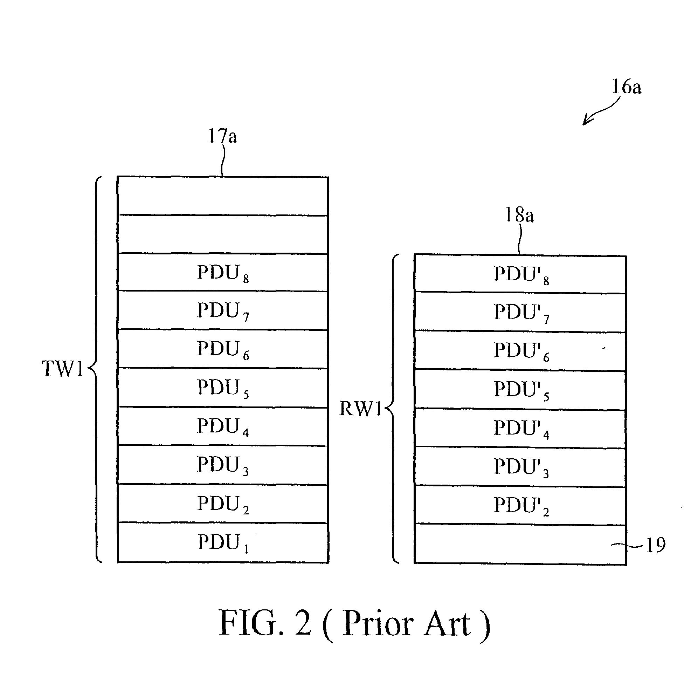

The first station 12 communicates with the second station 14 over a plurality of radio bearers. Each radio bearer has its receiving window and transmission window. Therefore, the transmitting buffers 17a, 17b and the receiving buffers 18a, 18b need to be properly configured so that each radio bearer can utilize the transmitting buffers 17a, 17b and the receiving buffers 18a, 18b to store data. Please refer to Fig. 2, which is a schematic diagram of the buffer memory 16a shown in Fig.1. For simplicity, suppose that the buffer memory 16a is capable of storing 18 protocol data units (PDUs) in total. For the buffer memory 16a, the capacity of the transmitting buffer 17a corresponds to 10 PDUs, and the capacity of the receiving buffer 18a corresponds to 8 PDUs.

In the beginning, a first radio bearer RB1 is established between the first station 12 and the second station 14. Therefore, all capacity of the buffer memory 16a is allocated to the radio bearer RB1. That is, a memory block TW1 is configured to have a size equaling 10, and it stands for a transmission window corresponding to the radio bearer RB1. In addition, a memory block RW1 is configured to have a size equaling 8, and it stands for a receiving window corresponding to the radio bearer RB1. After a period of time, the transmitting buffer 17a stores PDU₁-PDU₈ that are waiting to be delivered to the second station 14, and the receiving buffer 18a stores PDU'₂-PDU'₈ that are transmitted from the second station 14. PDU₁-PDU₈ are buffered in the transmitting buffer until they are positively acknowledged by the second station 14. And, in the case of in-sequence delivery configuration, PDU'₂-PDU'₈ are buffered in the receiving buffer until the missing PDU'₁ is received successfully. Note that a piece of storage space 19 of the receiving buffer 18a is reserved for the missing PDU'₁.

In the above description, we mentioned that the memory blocks TW1 and RW1 stand for a transmission window and a receiving window respectively. This is just a description for simplicity. In practical implementations, the size of memory block TW1 may be larger than what is needed to accommodate all the PDUs fully occupying the transmission window. So is true for memory block RW1.

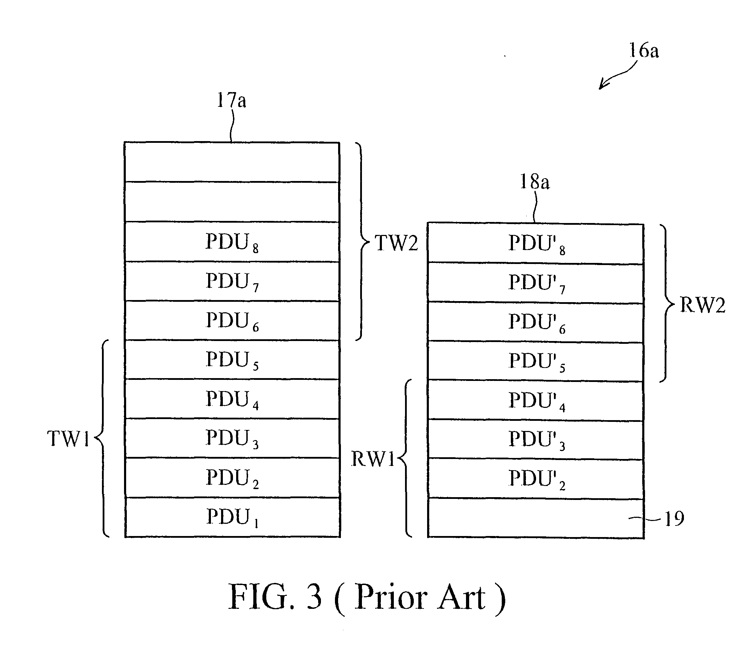

As mentioned above, the first station 12 is capable of communicating with the second station 14 through a plurality of radio bearers. Therefore, when the communication system 10 decides to add a new radio bearer RB2 between the first station 12 and the second station 14, the buffer memory 16a needs to be reconfigured. In other words, the newly established radio bearer and these previously established radio bearers share this buffer memory 16a. Please refer to Fig.2 in conjunction with Fig.3. Fig.3 is a schematic diagram illustrating the reconfiguration result of the buffer memory 16a shown in Fig.1. Suppose that the radio bearers RB1, RB2 equally share the transmitting buffer 17a and the receiving buffer 18a of the first station 12. In other words, the size of the memory block TW1 corresponding to the radio bearer RB1 is reduced to be 5, and the size of the memory block RW1 corresponding to the radio bearer RB1 is reduced to be 4. Concerning the new radio bearer RB2, a memory block TW2 corresponding to the radio bearer RB2 is configured to have a size equaling 5, and a memory block RW2 is configured to have a size equaling 4. Please note that, basically, the memory block TW2 defines the transmission window of the radio bearer RB2, and the memory block RW2 defines the receiving window of the radio bearer RB2. As mentioned before, the memory blocks TW2 and RW2 may be larger than what are needed for their respective windows.

As shown in Fig.3, these PDU₆-PDU₈ belonging to the radio bearer RB1 occupy part of the storage space allocated to the new radio bearer RB2 after the transmitting buffer 17a is reconfigured. On the other hand, the PDU'₅-PDU'₈ belonging to the radio bearer RB1 occupy all the storage space allocated to the new radio bearer RB2 after the receiving buffer 18a is reconfigured. One prior art method discards these PDUs (PDU₆-PDU₈ and PDU'₅-PDU'₈) when the reconfiguration is completed. However, doing so might lead to permanent data loss. Taking the data reception for example, the discarded PDUs, PDU'₅-PDU'₈, are considered as not being successfully received by the first station 12. Therefore, the discarded PDUs need to be retransmitted later by the second station 14. However, it is possible that the discarded PDUs may have been positively acknowledged before the reconfiguration. If the second station 14 discards these positively acknowledged PDU'₅-PDU'₈, the second station 14 is unable to retransmit them. Therefore, these PDU'₅-PDU'₈ are permanently lost. Similarly, suppose PDU₆-PDU₈ are discarded. If PDU₆-PDU₈ are not successfully received by the second station 14, the first station is unable to retransmit them when requested.

A prior art advanced method is disclosed for avoiding the above-mentioned permanent data loss. After the transmission window size and the receiving window size are reduced, the previously stored PDUs that occupy storage space allocated to another radio bearer are kept without being discarded. That is, after the reconfiguration is completed, the transmitting buffer 17a keeps PDU₆-PDU₈, and the receiving buffer 18a keeps PDU'₅-PDU'₈. According to the prior art advanced method, the radio bearers RB1 and RB2 race to get the right of using the available storage space within the transmitting buffer 17a for storing outgoing data units. Therefore, there is no guaranty about when the newly established radio bearer RB2 can get its allocated storage space within the transmitting buffer 17a. Concerning the data reception, the receiving buffer RW1 for the radio bearer RB1 is guaranteed to be capable of receiving one PDU with the lowest SN in the receiving window transferred from the second station 14 through the radio bearer RB1. Therefore, when the receiving buffer 18a is full, the PDUs outputted from the second station 14 to the first station 12 through the radio bearer RB1 are sure to be processed at least for the PDU with the lowest SN in the receiving window. This can be accomplished by the reserved storage space 19 for the PDU of the lowest missing SN. However, for the newly established RB2, received PDUs that should be allowed in its receiving window may turn out to be discarded because its allocated buffer is occupied by the radio bearer RB1. In other words, the receiving buffer RW2 for the radio bearer RB2 can not be guaranteed to be capable of receiving one PDU even with the lowest SN in the receiving window transferred from the second station 14 through the radio bearer RB2 so that the radio transmission efficiency is degraded.

### Summary of Invention

It is therefore a primary objective of the claimed invention to provide a method and an apparatus of controlling data delivery between a first station and a peer second station in a wireless communication system for digesting data units outside a reconfigured receiving window and a reconfigured transmitting window.

With regard to the data transmission, the claimed method blocks a sender from processing SDUs required to be transmitted through a radio bearer when a memory block corresponding to the radio bearer is full. In addition, after a transmitting buffer is reconfigured owing to establishment of a new radio bearer, these PDUs required to be transmitted through a previously established radio bearer are kept without being discarded. Then, these PDUs are gradually received by a peer receiver. Therefore, the new radio bearer is guaranteed to gradually take control of these occupied storage space according to the claimed method.

With regard to the data reception, the claimed method guarantees that every PDUs received by the receiver can be accommodated in the memory block corresponding to the newly established radio bearer. Therefore, the receiver outputs WINDOW SUFIs to the sender for dynamically tuning a transmission window size corresponding to the new radio bearer. That is, the PDUs transmitted from the sender will never be discarded according to the claimed method. To sum up, radio transmission efficiency is greatly improved, and data throughput is optimized.

These and other objectives of the claimed invention will no doubt become obvious to those of ordinary skill in the art at reading the following detailed description of the preferred embodiments that are illustrated in the various figures and drawings.

### Brief Description of Drawings

Fig.1 is a simplified block diagram of a prior art wireless communication system.
Fig.2 is a schematic diagram of a buffer memory shown in Fig. 1.
Fig.3 is a schematic diagram illustrating a reconfiguration result of the buffer memory shown in Fig.1.
Fig.4 is a flow chart illustrating a method of controlling data transmission between a first station and a second station according to the present invention.
Fig.5 is a diagram illustrating management of memory blocks according to the present invention.
Fig.6 is a flow chart illustrating another method of controlling data transmission between the first station and the second station according to the present invention.
Fig.7 is a diagram illustrating the management of the transmitting buffer according to the present invention.
Fig.8 is a flow chart illustrating a method of controlling data reception between the first station and the second station according to the present invention.
Fig.9 is a block diagram illustrating a first station and a second station used for implementing the above-mentioned methods according to the present invention.

### Detailed Description

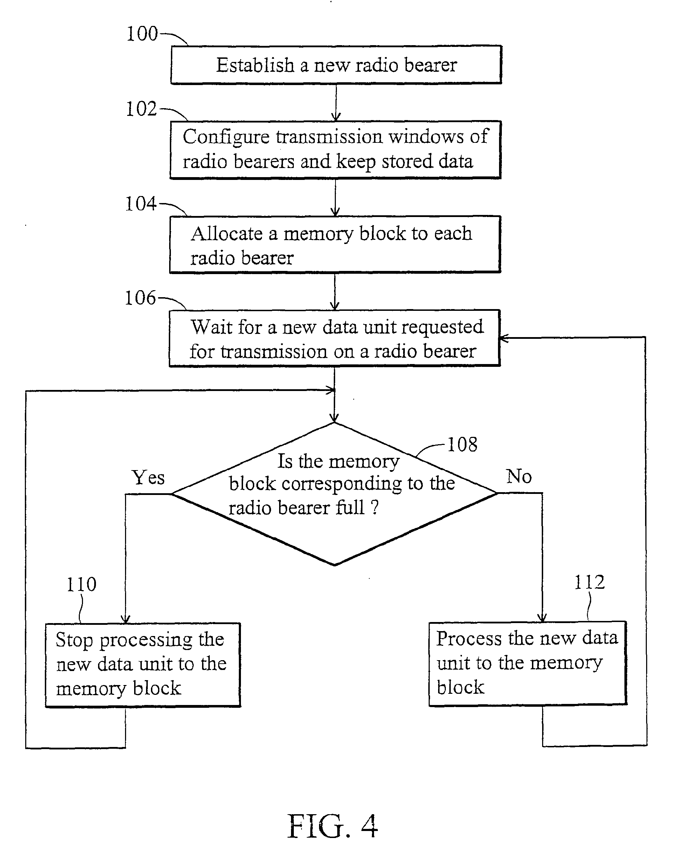

Please refer to Fig.4 in conjunction with Fig.1 and Fig.3. Fig.4 is a flow chart illustrating the method of controlling data transmission between the first station 12 and the second station 14 according to the present invention. The method according to the present invention is applied to the wireless communication system 10 shown in Fig.1, and the process of digesting data units outside the reconfigured transmission window is explained as follows. Suppose that a radio bearer RB1 is already established between the first station 12 and the second station 14, and the memory block TW1 defining the transmission window of the radio bearer RB1 is shown in Fig. 2. First, the communication system 10 drives the first station 12 and the second station 14 to establish a new radio bearer RB2 (step 100). When the radio bearer RB2 is established, the first station 12 reconfigures the original transmission and receiving window sizes of radio bearer RB1 and configure transmission and receiving window sizes for radio bearer RB2 (step 102). In addition, the PDUs originally stored by the transmitting buffer 17a are kept. After the reconfiguration, the first station 12 re-allocates memory block for TW1 and RW1 for radio bearer RB1, and allocates storage space (the memory block for TW2 and RW2) to the newly established radio bearer RB2 (step 104) . As shown in Fig. 3, the size of the memory block TW1 is reduced, and becomes half of the original size. Please note that the first station 12 keeps these PDU₆-PDU₈ that occupy part of the storage space allocated to the radio bearer RB2 when the transmitting buffer 17a is reconfigured.

Then, the first station 12 waits for new data unit requested for transmission on a radio bearer, RB1 or RB2 (step 106). When there is a new data unit requested for transmission, the first station 12 is driven to check if the memory block corresponding to the radio bearer requesting to transmit the new data is full (step 108) . For example, if the memory block TW2 is not full yet, it is able to accommodate new data unit on radio bearer RB2. Therefore, the data unit needed to be transmitted to the second station 14 through the radio bearer RB2 is processed and passed to the memory block TW2 (step 112) . Conversely, when the memory block TW1 is full, it is unable to accommodate any incoming data unit. Therefore, the data unit needed to be transmitted to the second station 14 through the radio bearer RB1 are stopped from being passed to the memory block TW1 (step 110). For example, the first station 12 stops processing the service data units (SDUs) submitted from upper layers. Therefore, no data unit corresponding to the radio bearer RB1 is passed to the memory block TW1. Concerning this preferred embodiment, it is obvious that no data will be discarded after the reconfiguration of the buffer memory 16a is performed.

As shown in Fig. 3, it is clear that the reconfigured memory block TW1 is full in the beginning. Therefore, data units needed to be transmitted to the second station 14 through the radio bearer RB1 are stopped from being passed to the memory block TW1. However, the first station 12 still processes the PDU₁-PDU₈ currently stored in the transmitting buffer 16a, and tries to deliver them to the second station 14 through the radio bearer RB1. When one of these PDU₁-PDU₈ is successfully delivered to the second station 14, the storage space available to the radio bearer RB2 is increased. Therefore, when four of the PDU₁-PDU₈ are successfully delivered to the second station 14, the memory block TW1 is capable of accommodate a new data unit. The first station 12 is driven to processing SDUs submitted from upper layers, and is capable of passing a PDU to the memory block TW1. By the way, when three of the PDU₁-PDU₈ are successfully delivered to the second station 14, the memory block TW2 is occupied by the radio bearer RB1 no more.

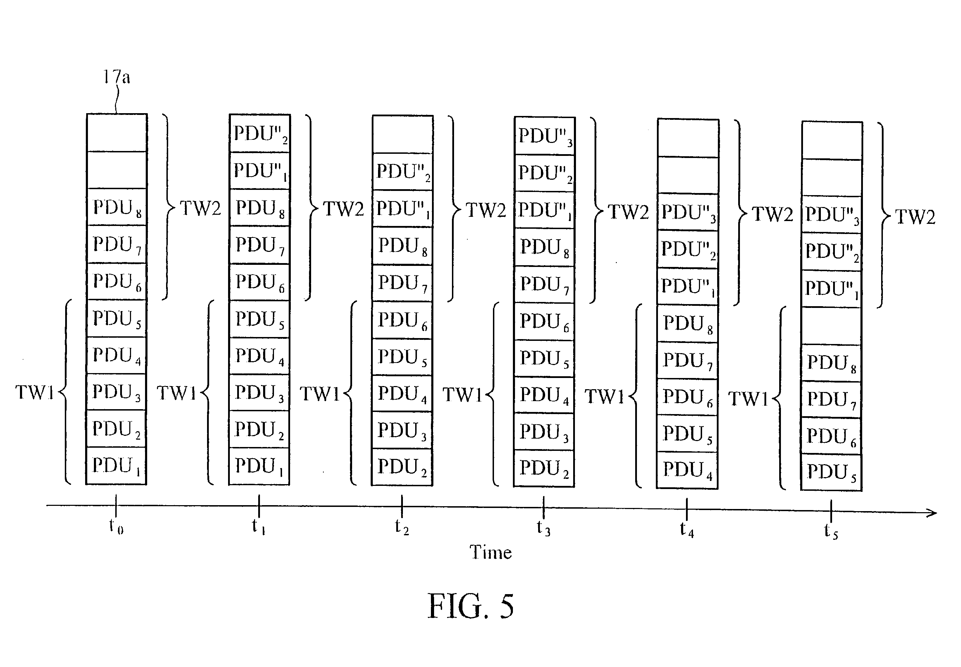

Please refer to Fig.5, which is a diagram illustrating the management of the memory blocks TW1, TW2 according to the present invention. Suppose that the transmitting buffer 17a is reconfigured at t0. Therefore, the available storage space of the newly allocated memory block TW2 is capable of accommodating 2 PDUs. In addition, the first station 12 is blocked from processing SDUs that are going to be transmitted through the radio bearer RB1 because the memory block TW1 is full now. At t1, the first station 12 successively stores PDU"₁ and PDU"₂ into the memory block TW2. Now, the memory block TW2 is full, and the first station 12 is blocked from processing SDUs that are going to be transmitted through the radio bearer RB2. Similarly, the first station 12 is still unable to process SDUs that are going to be transmitted through the radio bearer RB1.

At t2, the first station 12 successfully delivers PDU₁ to the second station 14 through the radio bearer RB1. The occupied storage space of the memory block TW2, therefore, is released accordingly. At this time, the first station 12 is still blocked from processing SDUs that are going to be transmitted through the radio bearer RB1. However, because the memory block TW2 is capable of accommodating a new PDU, the first station 12 starts processing SDUs submitted from upper layers and requested for transmission through the radio bearer RB2. Therefore, a PDU"₃ is stored into the memory block TW2 at t3. As shown in Fig.5, the memory block TW2 is full at t3. In addition, the first station 12 is still blocked from processing SDUs that are going to be transmitted through the radio bearer RB1 at t3.

At t4, the first station 12 successfully delivers PDU₂ and PDU₃ to the second station 14. Therefore, some more occupied storage space is released for the radio bearer RB2. At this time, the first station 12 is still blocked from processing SDUs that are going to be transmitted through the radio bearer RB1. Now, the memory block TW2 is capable of accommodating new PDUs. Therefore, the first station 12 starts processing SDUs that are submitted from upper layers and required to be transferred through the radio bearer RB2. Please note that PDU₆-PDU₈ do not occupy the storage space within the memory block TW2 at t4. In other words, the radio bearer RB2 completely takes control of the memory block TW2 without sharing it with the radio bearer RB1.

At t5, the first station 12 delivers PDU₄ to the second station 14. As shown in Fig.5, the memory block TW1 has available storage space for storing a new PDU now. Therefore, the first station 12 starts processing SDUs submitted from upper layers and required to be transferred through the radio bearer RB1. In this preferred embodiment, the PDUs occupying the storage space of the memory block TW2 allocated to the radio bearer RB2 are gradually digested by data transmission on the radio bearer RB1, and the amount of the storage space controlled by the radio bearer RB2 is monotonically increased. After a period of time, the storage space occupied by the radio bearer RB1 is released, and the radio bearers RB1, RB2 utilize their own allocated memory blocks TW1, TW2 to store data as buffers. Because the PDUs occupying another memory block are kept and PDUs are blocked from being passed to a memory block that is already full, no PDU is discarded after the reconfiguration of the transmitting buffer 17a.

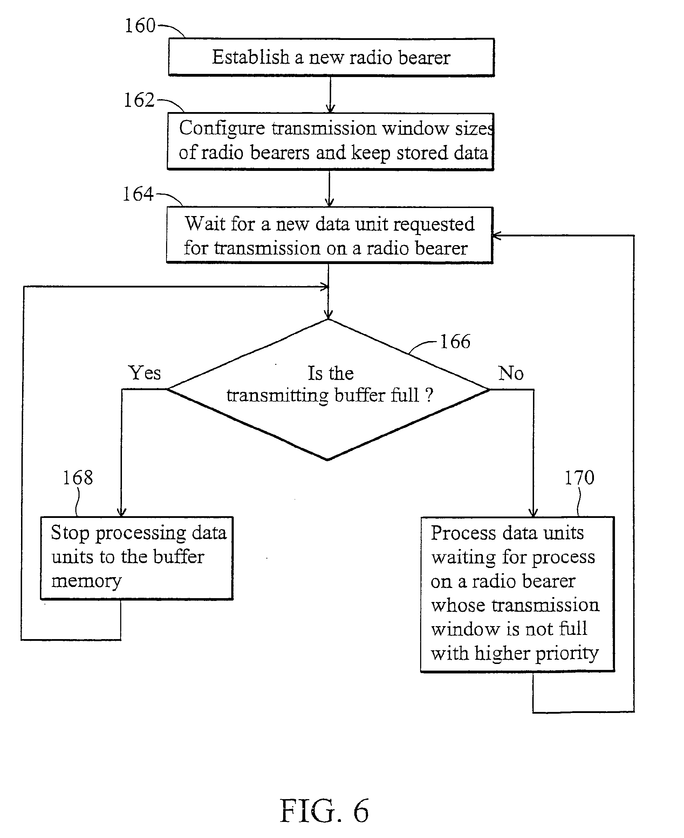

In the above embodiment of the present invention, each radio bearer is allocated its own memory block. Note that although Fig. 3 indicates that TW and RW are separately located, it is not necessary. For the case that memory block size is larger than what is needed for the transmission window and the receiving window, memory blocks TW and RW can be utilized as one memory block for each radio block. In this way, the flexibility and efficiency of the memory block usage can be increased. Furthermore, all the memory blocks allocated for all the radio bearers can also be utilized as a whole to further increase the flexibility and efficiency of the memory block usage. Another embodiment of the present invention to treat the memory block as a whole for all radio bearers is illustrated by Fig.6. In this second embodiment, the storage space allocated for transmitting and receiving windows for each radio bearer is guaranteed to have higher priority. All the other excess memory space is shared equally by all the established radio bearers for data units that are requested to be transmitted.

Please refer to Fig. 6 in conjunction with Fig.1 and Fig.2. Fig.6 is a flow chart illustrating another method of controlling data transmission between the first station 12 and the second station 14 according to the present invention. The method according to the present invention is applied to the wireless communication system 10 shown in Fig.1, and the process of digesting data units outside the reconfigured transmission window, while treating the transmitting buffer 17a as a whole, is explained as follows. Suppose that a radio bearer RB1 is already established between the first station 12 and the second station 14, and the memory block TW1 defining the transmission window of the radio bearer RB1 is shown in Fig.2. First, the communication system 10 drives the first station 12 and the second station 14 to establish a new radio bearer RB2 (step 160). When the radio bearer RB2 is established, the first station 12 reconfigures the original transmission and receiving window sizes of radio bearer RB1 and configure transmission and receiving window sizes for radio bearer RB2 (step 162). In addition, the PDUs originally stored by the transmitting buffer 17a are kept. Except the storage space needed for the configured transmitting windows, extra memory space is not allocated for individual radio bearer and is utilized as whole. Suppose that the size of the transmission window TW1 is reduced from 10 to 4. Please note that the first station 12 keeps these PDU₅-PDU₈ that occupy the storage space over what is needed for the reconfigured transmission window TW1.

Then, the first station 12 waits for a new data unit requested for transmission on a radio bearer, RB1 or RB2 (step 164) . When there is a new data unit requested for transmission, the first station 12 is driven to check if the transmitting buffer 17a as a whole is full (step 166). For example, as in Fig.2 the transmitting buffer 17a is not full, it is able to accommodate new data units on radio bearers RB1 or RB2. In addition, if there are new data units requested for transmission on both radio bearers, RB1 and RB2, the first station 12 is driven to process data units that are waiting for process on a radio bearer whose transmission window is not full with higher priority (step 170). Therefore, the data unit needed to be transmitted to the second station 14 through the radio bearer RB2 is processed and passed to the transmitting buffer 17a with higher priority. Conversely, when the transmitting buffer 17a is full, it is unable to accommodate any incoming data units, which are hence stopped from being processed to the transmitting buffer 17a (step 168). In other words, the first station 12 stops processing any service data units (SDUs) submitted from upper layers. Therefore, no data unit is passed to the transmitting buffer 17a when the transmitting buffer 17a is full. Concerning this preferred embodiment, it is obvious that no data will be discarded after the reconfiguration of the buffer memory 16a is performed.

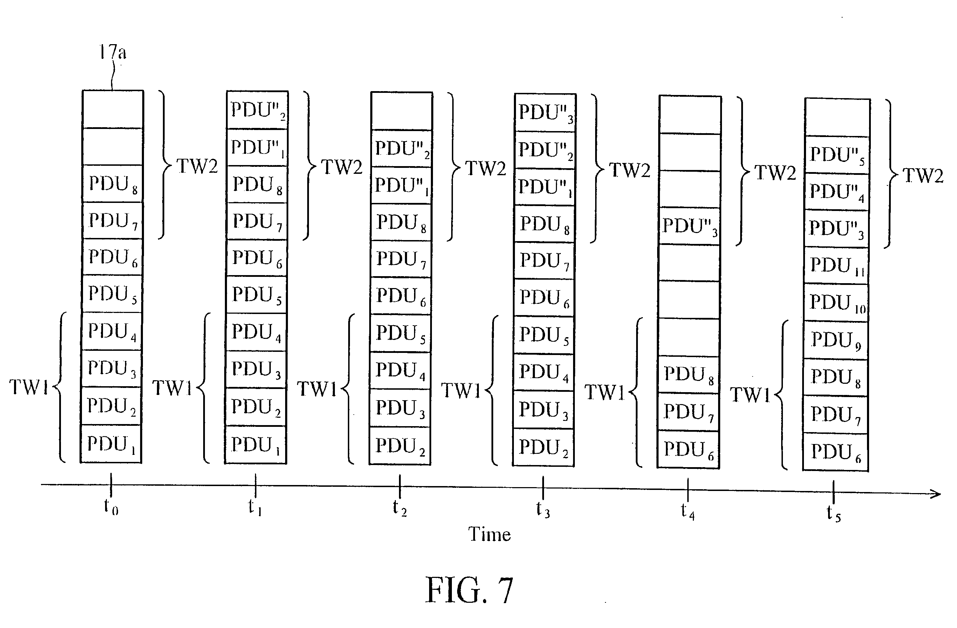

Please refer to Fig.7, which is a diagram illustrating the management of the transmitting buffer 17a according to the second embodiment of the present invention. Note that there are extra space other than the reconfigured transmission windows TW1 and TW2. Suppose that the transmission windows TW1 and TW2 are reconfigured to have a size of 4 at t0. The transmitting buffer 17a is capable of accommodating additional 2 PDUs in total. In addition, the transmission window TW1 on radio bearer RB1 is full now so that radio bearer RB2 has higher priority for processing new data units than the radio bearer RB1. At t1, the first station 12 successively stores PDU"₁-PDU"₂ into the transmitting buffer 17a. Now, the transmitting buffer 17a is full, and the first station 12 is blocked from processing new SDUs that are going to be transmitted through both radio bearers RB1 and RB2.

At t2, the first station 12 successfully delivers PDU₁ to the second station 14 through the radio bearer RB1. The total occupied storage space of the transmitting buffer 17a, therefore, is released accordingly. At this time, the first station 12 is capable of processing a new data unit on radio bearer RB2 with higher priority over radio bearer RB1 since the transmission window on radio bearer RB1 is still full. Therefore, a PDU"₃ on radio bearer RB2 is stored into the transmitting buffer 17a at t3. As shown in Fig.7, the transmitting buffer 17a is full at t3. The first station 12 is blocked from processing new SDUs that are going to be transmitted through both the radio bearers RB1 and RB2 at t3.

At t4, the first station 12 successfully delivers PDU₂-PDU₅ on radio bearer RB1 and successfully delivers PDU"₁-PDU"₂ on radio bearer RB2 to the second station 14. Therefore, some more occupied storage space is released for the transmitting buffer 17a. At this time, both radio bearers RB1 and RB2 do not have their transmission windows fully occupied so that new data units of both radio bearers can be processed into the transmitting buffer 17a.

At t5, a PDU₉ on radio bearer RB1 is processed to make transmission window TW1 full. PDU"₄-PDU"₅ on radio bearer RB2 is processed to occupy a space within transmission window TW2. Now, the radio bearer RB2 owns higher processing priority of an incoming new data unit over radio bearer RB1. However, there is no new data unit requested on radio bearer RB2 so that PDU₁₀-PDU₁₁ on radio bearer RB1 can be processed into the transmitting buffer 17a to occupy the memory space out of the transmission windows TW1 and TW2. Note that the PDU₁₀-PDU₁₁ are processed into the transmitting buffer 17a although it is not within the range of transmission window TW1 of the radio bearer RB1. In this preferred embodiment, the temporarily over-occupied storage space of the transmitting buffer 17a by the radio bearer RB1 after transmission window relocation is gradually digested by data transmission on the radio bearer RB1, and the amount of the storage space available to the radio bearer RB2 is monotonically increased. After a period of time, the storage space over-occupied by the radio bearer RB1 is released, and the radio bearers RB1 and RB2 utilize their own allocated memory space for their transmission windows TW1 and TW2 to store data as buffers. Extra memory space besides the allocated transmission windows can be equally shared by RB1 and RB2. In this way, the newly established radio bearer RB2 is guaranteed to get its allocated storage space gradually within the transmitting buffer 17a for its transmission window.

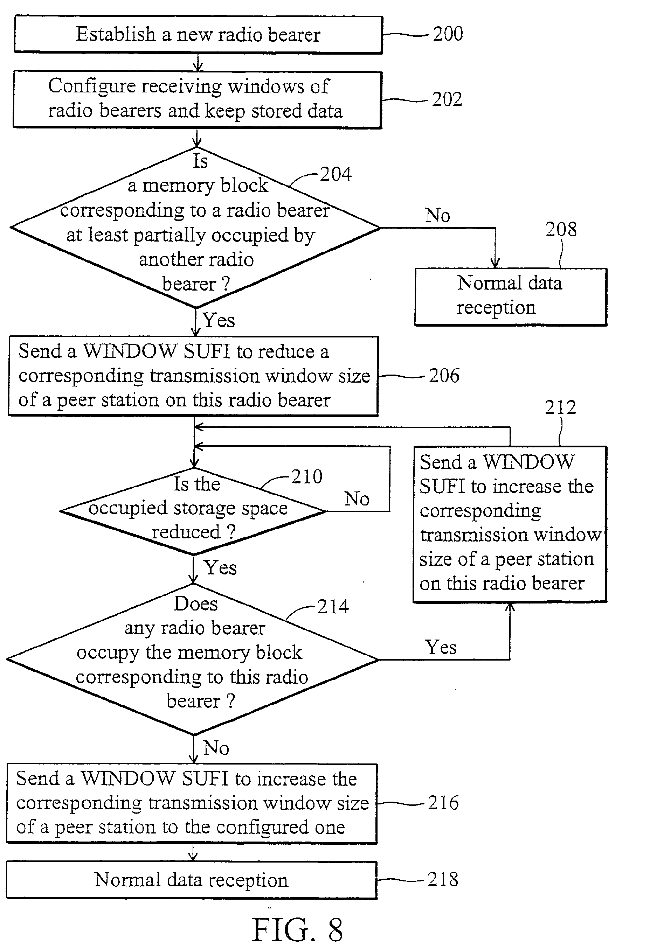

Concerning the data reception after the reconfiguration of the receiving buffer 18a, the method according to the present invention utilizes a control message such as a WINDOW SUFI to prevent the second station 14 from transmitting PDUs, which will be discarded by the first station 12 owing to buffer shortage of the receiving buffer 18a. Please refer to Fig.8 in conjunction with Fig.1 and Fig.3. Fig.8 is a flow chart illustrating the method of controlling data reception between the first station 12 and the second station 14 according to the present invention. The method according to the present invention is applied to the wireless communication system 10 shown in Fig.1, and the process of digesting data units outside the reconfigured receiving window is explained as follows. Suppose that a radio bearer RB1 is already established between the first station 12 and the second station 14, and the memory block RW1 defining a receiving window of the radio bearer RB1 is shown in Fig.2. First, the communication system 10 drives the first station 12 and the second station 14 to establish a new radio bearer RB2 (step 200). When the radio bearer RB2 is established, the first station 12 has to reconfigure the original memory block RW1, and allocates storage space to the newly established radio bearer RB2 (step 202). In addition, the PDUs (PDU'₂-PDU'₈) originally stored in the receiving buffer 18a are kept. As shown in Fig. 3, the size of the memory block RW1 is reduced, and becomes half of the original size. Please note that the first station 12 keeps these PDU'₅-PDU'₈ that occupy the storage space allocated to the radio bearer RB2 when the receiving buffer 17a is reconfigured.

Then, the first station 12 checks if the memory block RW2 allocated to the radio bearer RB2 is at least partially occupied by the radio bearer RB1 (step 204). That is, when the receiving buffer 18a is reconfigured, the first station 12 is driven to check if the storage space available to the radio bearer RB2 is less than the total capacity of the memory block RW2 allocated to the radio bearer RB2. When the storage space available to the radio bearer RB2 is less than the total capacity of the memory block RW2, the first station 12 is driven to output a control message such as a WINDOW SUFI to the peer entity (the second station 14) for reducing a transmitting window size corresponding to the radio bearer RB2 (step 206). As shown in Fig. 3, the memory block RW2 is temporarily capable of storing no PDU when the receiving buffer 18a is reconfigured owing to the establishment of the radio bearer RB2. Therefore, if the second station 14 delivers some PDUs to the first station 12 through the radio bearer RB2, the first station 12 discards all the inputted PDUs. Therefore, the first station 12 in this preferred embodiment utilizes a WINDOW SUFI to control the amount of PDUs outputted from the second station 14. For example, in Fig. 3, the memory block RW2 is capable of storing no PDU delivered through the radio bearer RB2 when the receiving buffer 18a is reconfigured. Therefore, the first station 12 transmits the WINDOW SUFI having a window size number equaling 0 to set the transmitting window of the second station 14. In other words, the second station 14 is temporarily not allowed to deliver any PDU to the first station 12 through the radio bearer RB2.

In the preferred embodiment, if the occupied storage space within the newly establish radio bearer RB2 is reduced (step 210), the first station 12 further checks if the occupied storage space is fully released (step 214). If it is not, the first station 12 delivers a WINDOW SUFI to the second station 14 for increasing the corresponding transmission window of the radio bearer RB2 (step 212) and proceeds with step 210. For example, when one of the PDUs (PDU'₁-PDU'₈ shown in Fig.3) is successfully passed to upper layers of the first station 12, the storage space available to the radio bearer RB2 is increased accordingly. Therefore, the memory block RW2 is capable of accommodating one PDU transferred from the second station 14 through the radio bearer RB2. The first station outputs a WINDOW SUFI to the second station 14 for assigning a value equaling 1 to the size of the corresponding transmission window because the memory block RW2 is capable of accommodating 1 PDU. As these PDUs belonging to the radio bearer RB1 are gradually digested by the first station 12, the first station 12 accordingly outputs WINDOW SUFIs to inform the second station 14 about the release of the occupied storage space. That is, the second station 14 can increase its transmission window corresponding to the radio bearer RB2 because the storage space available to the radio bearer RB2 is increased. When the occupied storage space of RB2 is fully released, the first station 12 sends a WINDOW SUFI to increase the size of the corresponding transmission window to the configured one (step 216). No further WINDOW SUFI needs to be sent after step 216. Normal data reception (step 218) proceeds after step 216.

As mentioned above, the first station 12 sends a new WINDOW SUFI when the amount of PDUs occupying the memory block RW2 allocated to the radio bearer RB2 is reduced by 1. However, the first station 12 is also allowed to send a new WINDOW SUFI when the amount of PDUs occupying the memory block RW2 allocated to the radio bearer RB2 is reduced by a predetermined value greater than 1. That is, the first station 12 does not need to send WINDOW SUFIs to the second station 14 too frequently. The same objective of gradually increasing the size of the corresponding transmission window of the second station 14 according to the storage space available to the radio bearer RB2 at the first station 12 is achieved.

On the other hand, if the storage space available to the radio bearer RB2 is equal to the total capacity of the memory block RW2 when the receiving buffer 18a is reconfigured, the second station 14 delivers PDUs according to its current transmission window whose size is equal to the total capacity of the memory block RW2. Therefore, the memory block RW2 starts storing PDUs transmitted from the second station 14 through the radio bearer RB2. That is, the well-known normal data reception procedure is performed for the data units on the radio bearer RB2 (step 208).

In this preferred embodiment, step 210 is continuously performed to detect if the originally occupied storage space within the memory block RW2 is reduced. However, step 210 also can be performed periodically instead of continuously. For example, the first station 12 utilizes a timer to clock a period of time after step 206 is performed. When the timer expires, step 210 is triggered to run its defined operations. If the occupied storage space is not further reduced, the timer is started again to clock the same period of time. On the contrary, if the occupied storage space is actually reduced, step 214 is performed. If step 214 leads to step 212, after step 212 completes its defined operations, the timer is started again to clock the same period of time. Similarly, the same objective of gradually increasing the size of the corresponding transmission window of the second station 14 according to the storage space available to the radio bearer RB2 at the first station 12 is achieved.

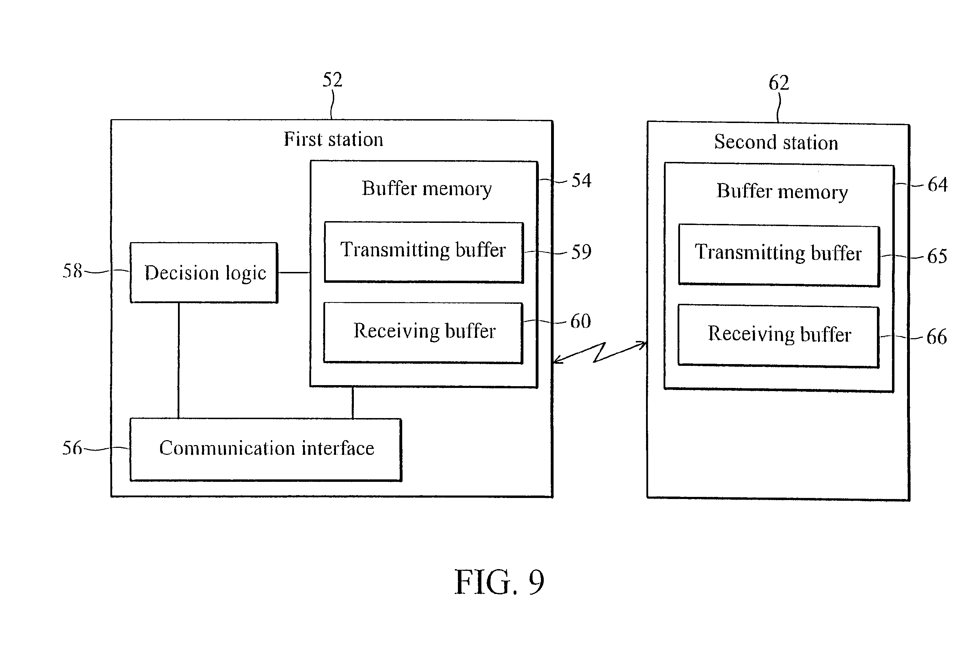

Please refer to Fig.9, which is a block diagram illustrating a first station 52 and a second station 62 used for implementing the above-mentioned methods according to the present invention. The first station 52 is in wireless communication with the second station 62. As shown in Fig.9, the first station 52 has a buffer memory 54, a communication interface 56, and a decision logic 58. For the second station 62, a buffer memory 64 is positioned on it. The buffer memory 54 includes a transmitting buffer 59 and a receiving buffer 60, and the buffer memory 64 includes a transmitting buffer 65 and a receiving buffer 66. Please note that the functionality of the transmitting buffers 59 and 65 is same as that of the transmitting buffers 17a and 17b shown in Fig.1, and functionality of the receiving buffers 60 and 66 is same as that of the receiving buffers 18a and 18b shown in Fig.1. Since the operations of the transmitting buffers 17a, 17b and the receiving buffers 18a, 18b are clearly detailed above, the lengthy description, therefore, is not repeated for simplicity.

Please note that when the first station 52 outputs data to the second station 62, the first station 52 becomes a. "sender", and the second station 62 becomes a "receiver". However, when the first station 52 receives data from the second station 62, the first station 52 becomes a "receiver", and the second station 62 becomes a "sender". That is, the naming of the "sender" and the "receiver" depends on the operations of the first station 52 and the second station 62.

Concerning the flow shown in Fig.4, the first station 52 acts as a sender. The communication interface 56 is used for performing steps 100, 102, 104, 106, 110, and 112, and the decision logic 58 is used for performing step 108. That is, whether a new data unit is processed or not is determined according to the checking result generated from the decision logic 58.

Concerning the flow shown in Fig.6, the first station 52 acts as a sender. The communication interface 56 is used for performing steps 160, 162, 164, 168, and 170, and the decision logic 58 is used for performing step 166. That is, whether a new data unit is processed or not is determined according to the checking result generated from the decision logic 58.

Concerning the flow shown in Fig.8, the first station 52 acts as a receiver. The communication interface 56 is used for performing steps 200, 202, 206, 208, 212, 216, and 218, and the decision logic 58 is used for performing steps 204, 210, and 214. Therefore, the transmission window size defined for the transmission window within the transmission buffer 65 is adjusted by the communication interface 56 acting according to the checking results generated from the decision logic 58.
Therefore, with the help of the decision logic 58 according to the present invention, the communication interface 56 is capable of appropriately handling the buffer memory 54 to achieve the objective of improving data transaction between the first station 52 and the second station 62.

In contrast to the prior art, the method according to the present invention blocks a first station from processing SDUs requested for transmission through a radio bearer when a memory block or a transmission window corresponding to the radio bearer is full. In addition, after a transmitting buffer is reconfigured owing to establishment of a new radio bearer, these PDUs required to be transmitted through a previously established radio bearer are kept without being discarded. Then, these PDUs are gradually received by a peer second station. Therefore, the new radio bearer is guaranteed to gradually take control of these occupied storage space according to the claimed method. With regard to the data reception, the method according to the present invention guarantees that every PDUs received by the first station can be accommodated in the memory block corresponding to the newly established radio bearer. That is, the first station outputs WINDOW SUFIs to the second station for dynamically tuning a transmission window size corresponding to the new radio bearer. Therefore, the PDUs transmitted from the second station will never be discarded according to the claimed method. To sum up, radio transmission efficiency is greatly improved, and data throughput is optimized.

Those skilled in the art will readily observe that numerous modifications and alterations of the device may be made while retaining the teachings of the invention. Accordingly, the above disclosure should be construed as limited only by the metes and bounds of the appended claims.

## Claims

1. A method for controlling wireless communication between a first station and a second station, the first station having a buffer memory, a first memory block of the buffer memory being allocated to a first radio bearer for storing data units requested to be transmitted to the second station through the first radio bearer, the method comprising the steps of:
(a) establishing a second radio bearer between the first station and the second station;
(b) reconfiguring the first memory block, and allocating a second memory block of the buffer memory to the second radio bearer for storing data units requested to be transmitted to the second station through the second radio bearer; and
(c) blocking the first station from passing a first data unit to the first memory block if the first memory block is unable to accommodate the first data unit, wherein the first data unit is requested to be transmitted to the second station through the first radio bearer.

2. The method of claim 1 further comprising blocking the first station from passing a second data unit to the second memory block if the second memory block is unable to accommodate the second data unit, wherein the second data unit is requested to be transmitted to the second station through the second radio bearer.

3. The method of claim 2 wherein the first station stops processing the first data unit if the first memory block is full, and the first station stops processing the second data unit if the second memory block is full.

4. The method of claim 1 wherein step (b) further comprises reducing the first memory block within the buffer memory for reconfiguring the first memory block.

5. The method of claim 1 wherein step (b) further comprises keeping data units stored within the buffer memory when the second memory block is allocated.

6. A method for controlling wireless communication between a first station and a second station, the first station having a buffer memory, a first memory block of the buffer memory being allocated to a first radio bearer for storing data units transmitted from the second station through the first radio bearer, the method comprising the steps of:
(a) establishing a second radio bearer between the first station and the second station;
(b) allocating a second memory block of the buffer memory to the second radio bearer for storing data units transmitted from the second station through the second radio bearer; and
(c) if a capacity of the second memory block available to the second radio bearer is less than a total capacity of the second memory block allocated to the second radio bearer, driving the first station to output a control message to the second station for adjusting a size of a transmission window of the second station for the second radio bearer, wherein the transmission window delimits a number of protocol data units, called PDUs hereafter, which are allowed to transmit on the second radio bearer.

7. The method of claim 6 further comprising keeping data units stored within the buffer memory when the second memory block is allocated.

8. The method of claim 6 wherein the size of the transmission window of the second station for the second radio bearer is adjusted to be equal to the capacity of the second memory block available to the second radio bearer when the second station receives the control message from the first station.

9. The method of claim 6 wherein step (b) further comprises reducing the first memory block within the buffer memory for allocating the second memory block within the buffer memory.

10. The method of claim 6 wherein step (c) further comprises driving the first station to output the control message for increasing the size of the transmission window of the second station for the second radio bearer if the capacity of the second memory block available to the second radio bearer is increased by a predetermined amount of space.

11. The method of claim 10 wherein if the capacity of the second memory block increased by the predetermined amount of space reaches the total capacity of the second memory block, the first station outputs the control message to adjust the size of the transmission window of the second station for the second radio bearer to be equal to a configured size when the second radio bearer is established.

12. The method of claim 10 wherein step (c) further comprises driving the first station to periodically check if the capacity of the second memory block available to the second radio bearer is increased.

13. The method of claim 6 wherein before the second memory block starts storing data units transmitted from the second station through the second radio bearer, the first station outputs the control message for decreasing the size of the transmission window of the second station for the second radio bearer if the capacity of the second memory block available to the second radio bearer is less than the total capacity of the second memory block allocated to the second radio bearer.

14. A method for controlling wireless communication between a first station and a second station, the first station having a buffer memory, a first transmission window being configured within the buffer memory for accommodating data units allowed to be transmitted to the second station through a first radio bearer, wherein data units not accommodated in the first transmission window are not allowed to transmit through the first radio bearer before at least one PDU of lowest sequence number accommodated in the first transmission window is positively acknowledged to be received, the method comprising the steps of:
(a) establishing a second radio bearer between the first station and the second station;
(b) reconfiguring the first transmission window, and configuring a second transmission window within the buffer memory for accommodating data units allowed to be transmitted to the second station through the second radio bearer; and
(c) if the buffer memory excluding the second transmission window is unable to accommodate a first new data unit requested to be transmitted to the second station through the first radio bearer, blocking the first station from passing the first new data unit to the buffer memory.

15. The method of claim 14 further comprising:
when the buffer memory excluding the second transmission window is capable of accommodating the first new data unit, storing the first new data unit into the buffer memory.

16. The method of claim 15 further comprising:
if the first transmission window is capable of accommodating the first new data unit, storing the first new data unit into the first transmission window.

17. The method of claim 14 further comprising:
if the buffer memory excluding the first transmission window is unable to accommodate a second new data unit requested to be transmitted to the second station through the second radio bearer, blocking the first station from passing the second new data unit to the buffer memory.

18. The method of claim 17 further comprising:
when the buffer memory excluding the first transmission window is capable of accommodating the second new data unit, storing the second new data unit into the buffer memory.

19. The method of claim 18 further comprising:
if the second transmission window is capable of accommodating the second new data unit, storing the second new data unit into the second transmission window.

20. The method of claim 14 wherein the first station stops processing the new data unit if the buffer memory is full.

21. The method of claim 14 wherein step (b) further comprises keeping data units stored within the buffer memory when the second transmission window is configured.

22. A sender in wireless communication with a receiver, the sender allocating a first memory block to a first radio bearer for storing data units requested to be transmitted to the receiver through the first radio bearer, the sender comprising:
a buffer memory for allocating the first memory block;
a communication interface electrically connected to the buffer memory for establishing a second radio bearer between the sender and the receiver, reconfiguring the first memory block, and allocating a second memory block of the buffer memory to the second radio bearer for storing data units requested to be transmitted to the receiver through the second radio bearer; and
a decision logic electrically connected to the communication interface for blocking the communication interface from passing a first data unit to the first memory block if the first memory block is unable to accommodate the first data unit, wherein the first data unit is requested to be transmitted to the receiver through the first radio bearer.

23. The sender of claim 22 wherein the decision logic blocks the communication interface from passing a second data unit to the second memory block if the second memory block is unable to accommodate the second data unit, wherein the second data unit is requested to be transmitted to the receiver through the second radio bearer.

24. The sender of claim 23 wherein the communication interface stops processing the first data unit if the decision logic detects that the first memory block is full, and the communication interface stops processing the second data unit if the decision logic detects that the second memory block is full.

25. The sender of claim 22 wherein the communication interface reduces the first memory block within the buffer memory for reconfiguring the first memory block.

26. The sender of claim 22 wherein the communication interface keeps data units stored within the buffer memory when the second memory block is allocated.

27. A receiver in wireless communication with a sender, the receiver allocating a first memory block to a first radio bearer for storing data units transmitted from the sender through the first radio bearer, the receiver comprising:
a buffer memory for allocating the first memory block;
a communication interface electrically connected to the buffer memory for establishing a second radio bearer between the sender and the receiver, and allocating a second memory block of the buffer memory to the second radio bearer for storing data units transmitted from the sender through the second radio bearer; and
a decision logic electrically connected to the communication interface for driving the communication interface to output a control message to the sender for adjusting a size of a transmission window of the sender for the second radio bearer if a capacity of the second memory block available to the second radio bearer is less than a total capacity of the second memory block allocated to the second radio bearer, wherein the transmission window delimits a number of protocol data units, called PDUs hereafter, which are allowed to transmit on the second radio bearer.

28. The receiver of claim 27 wherein the communication interface keeps data units stored within the buffer memory when the second memory block is allocated.

29. The receiver of claim 27 wherein the control message is used for adjusting the size of the transmission window of the sender for the second radio bearer to be equal to the capacity of the second memory block available to the second radio bearer.

30. The receiver of claim 27 wherein the communication interface reduces the first memory block within the buffer memory for allocating the second memory block within the buffer memory.

31. The receiver of claim 27 wherein the decision logic drives the communication interface to output the control message for increasing the size of the transmission window of the sender for the second radio bearer if the capacity of the second memory block available to the second radio bearer is increased by a predetermined amount of space.

32. The receiver of claim 31 wherein if the decision logic detects that the capacity of the second memory block increased by the predetermined amount of space reaches the total capacity of the second memory block, the communication interface outputs the control message to adjust the size of the transmission window of the sender for the second radio bearer to be equal to a configured size when the second radio bearer is established.

33. The receiver of claim 31 wherein the decision logic periodically checks if the capacity of the second memory block available to the second radio bearer is increased.

34. The receiver of claim 27 wherein before the second memory block starts storing data units transmitted from the sender through the second radio bearer, the communication interface outputs the control message for decreasing the size of the transmission window of the sender for the second radio bearer if the capacity of the second memory block available to the second radio bearer is less than the total capacity of the second memory block allocated to the second radio bearer.

35. A sender in wireless communication with a receiver, the sender having a first transmission window configured for accommodating data units allowed to be transmitted to the receiver through a first radio bearer, data units not accommodated in the first transmission window being not allowed to transmit through the first radio bearer before at least one PDU of lowest sequence number accommodated in the first transmission window is positively acknowledged to be received, the sender comprising:
a buffer memory for allocating the first transmission window; a communication interface electrically connected to the buffer memory for establishing a second radio bearer between the sender and the receiver, reconfiguring the first transmission window, and configuring a second transmission window within the buffer memory for accommodating data units allowed to be transmitted to the receiver through the second radio bearer; and
a decision logic electrically connected to the communication interface for blocking the communication interface from passing the first new data unit to the buffer memory if the buffer memory excluding the second transmission window is unable to accommodate a first new data unit requested to be transmitted to the receiver through the first radio bearer.

36. The sender of claim 35 wherein the communication interface stores the first new data unit into the buffer memory when the decision logic detects that the buffer memory excluding the second transmission window is capable of accommodating the first new data unit.

37. The sender of claim 36 wherein if the first transmission window is capable of accommodating the first new data unit, the communication interface stores the first new data unit into the first transmission window.

38. The sender of claim 35 wherein the decision logic blocks the communication interface from passing a second new data unit to the buffer memory if the decision logic detects that the buffer memory excluding the first transmission window is unable to accommodate the second new data unit requested to be transmitted to the receiver through the second radio bearer.

39. The sender of claim 38 wherein the communication interface stores the second new data unit into the buffer memory when the buffer memory excluding the first transmission window is capable of accommodating the second new data unit.

40. The sender of claim 39 wherein the communication system stores the second new data unit into the second transmission window if the second transmission window is capable of accommodating the second new data unit.

41. The sender of claim 35 wherein the communication interface stops processing the new data unit if the decision logic detects that the buffer memory is full.

42. The sender of claim 35 wherein the communication interface keeps data units stored within the buffer memory when the second transmission window is configured.
